# EUROPEAN PATENT APPLICATION

(11) **EP 4 525 073 A1**
(43) Date of publication of application: **19.03.2025**
(21) Application number: 23873125.1
(22) Date of filing: 26.09.2023
(51) Int. Cl.: H01M 4/134, H01M 4/36, H01M 4/48, H01M 4/583, H01M 10/0525, H01M 4/525, H01M 4/505, H01M 4/02

(54) **NEGATIVE ELECTRODE AND SECONDARY BATTERY**

(30) Priority: 30.09.2022 KR 20220125394; 25.09.2023 KR 20230128281
(71) Applicant: LG Energy Solution, Ltd., Seoul 07335 (KR)
(72) Inventor: PIAO, Lilin, Daejeon 34122 (KR); LEE, Gyeongseop, Daejeon 34122 (KR); KIM, Minsoo, Daejeon 34122 (KR); KIM, Shulkee, Daejeon 34122 (KR); PARK, Kyutae, Daejeon 34122 (KR); BAEK, Sora, Daejeon 34122 (KR); YOO, Kwang Ho, Daejeon 34122 (KR); JUNG, Wonhee, Daejeon 34122 (KR)
(74) Representative: Plasseraud IP
(86) International application number: PCT/KR2023/014858
(87) International publication number: WO 2024/072013

(57) **Abstract**

The present invention relates to a secondary battery including: a current collector; a first negative electrode active material layer provided on the current collector; and a second negative electrode active material layer provided on the first negative electrode active material layer, wherein the first and second negative electrode active material layers include a silicon-based active material and natural graphite, and the natural graphite has an average particle diameter (D50) of 9 µm or less, and wherein a difference in porosity between the first negative electrode active material layer and the second negative electrode active material layer is 6% or less.

## Description

### [Technical Field]

This application claims priority to and the benefit of Korean Patent Application No. 10-2022-0125394 filed in the Korean Intellectual Property Office on September 30, 2022, and Korean Patent Application No. 10-2023-0128281 filed in the Korean Intellectual Property Office on September 25, 2023, the entire contents of which are incorporated herein by reference.

The present invention relates to a negative electrode for a secondary battery and a secondary battery including the same.

### [Background Art]

A secondary battery is universally applied not only to a portable device, but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the advantage that no by-products are generated from the use of energy.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

As utilization of the secondary battery increases, various battery performances are required. Attempts have been made to add additives to the active material layer in order to improve battery performance. Some performance of the battery may be improved depending on the type of the additive, but some performance may rather deteriorate. Accordingly, research is needed on the selection or a combination of materials included in an electrode that can improve the performance required for a secondary battery.

### [Detailed Description of the Invention]

### [Technical Problem]

The present invention has been made in an effort to provide a negative electrode for a secondary battery with improved rapid charge performance and a secondary battery including the same.

### [Technical Solution]

An exemplary embodiment of the present invention provides a negative electrode for a secondary battery including: a current collector; a first negative electrode active material layer provided on the current collector; and a second negative electrode active material layer provided on the first negative electrode active material layer, wherein the first and second negative electrode active material layers include a silicon-based active material and natural graphite, and the natural graphite has an average particle diameter (D50) of 9 µm or less, and wherein a difference in porosity between the first negative electrode active material layer and the second negative electrode active material layer is 6% or less.

Another exemplary embodiment of the present invention provides a secondary battery including the negative electrode for a secondary battery according to the exemplary embodiment described above, a positive electrode, and a separator.

### [Advantageous Effects]

According to the exemplary embodiments described in the present specification, in the negative electrode active material layer having a two-layer structure including a silicon-based active material and graphite, rapid charge performance can be maximized by controlling the difference in porosity between the upper and lower layers and optimizing the particle diameter of natural graphite. Specifically, the above configuration can prevent local lithium precipitation and improve rapid charge/discharge performance by equalizing the current density of the negative electrode. If the difference in porosity between the upper and lower layers becomes large, lithium ion diffusion becomes uneven and a phenomenon where lithium ions become rich locally occurs, which may lead to lithium precipitation. Small-particle diameter natural graphite has a smaller particle size compared to large-particle diameter natural graphite, so the lithium diffusion distance in the particle is short, allowing for rapid migration and charging.

### [Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In the present specification, the particle diameter refers to an average particle diameter indicated by D50. D50 can be defined as a particle size at 50% of a particle size distribution, and can be measured using a laser diffraction method. For example, a method for measuring an average particle diameter (D50) of the positive electrode active material may include dispersing particles of the positive electrode active material in a dispersion medium, introducing the dispersion into a commercially available laser diffraction particle size measuring device (e.g., Microtrac MT 3000), irradiating the dispersion with ultrasonic waves of approximately 28 kHz with an output of 60 W, and then calculating an average particle diameter (D50) corresponding to 50% of the cumulative volume in the measuring device.

In the present specification, descriptions referred to only as "active material layer" without first and second expressions may be applied to both the first and second active material layers.

A negative electrode for a secondary battery according to an exemplary embodiment of the present specification includes a current collector; a first negative electrode active material layer provided on the current collector; and a second negative electrode active material layer provided on the first negative electrode active material layer, wherein the first and second negative electrode active material layers include a silicon-based active material and natural graphite, and the natural graphite has an average particle diameter (D50) of 9 µm or less, and wherein a difference in porosity between the first negative electrode active material layer and the second negative electrode active material layer is 6% or less. In other words, the negative electrode for a secondary battery includes the two-layered negative electrode active material layers, the difference in porosity between the two-layered negative electrode active material layers is controlled to a specific value or smaller, and the natural graphite whose average particle diameter (D50) is controlled to 9 µm or less is used as an active material, together with the silicon-based active material. With this configuration, the current density of the negative electrode can be equalized and lithium precipitation at local locations can be prevented, thereby improving rapid charge/discharge performance.

According to an exemplary embodiment, the difference in porosity between the first negative electrode active material layer and the second negative electrode active material layer may be 6% or less or 5% or less. In order to control the difference in porosity as such, types of components included in each layer, a particle size, a content of each component, rolling conditions and the like can be adjusted. As for the rolling conditions, a rolling temperature, a rolling speed, a heating period of a rolling roll, and the like can be adjusted. For example, a method of raising a roll temperature by heating the rolling roll before rolling may be used. In this case, the temperature of the rolling roll may be controlled to a temperature ranging from 30°C to 60°C. When the negative electrode active material layer having a two-layer structure is rolled using a heated rolling roll, the difference in porosity between the upper and lower negative electrode active material layers can be reduced.

According to an exemplary embodiment, the porosities of the first negative electrode active material layer and the second negative electrode active material layer may be 1% to 40%, for example, 5 to 7%, respectively. If the difference in porosity between the upper and lower layers is large, a difference in lithium ion concentration may occur, which may cause lithium ions to gather locally and cause lithium precipitation.

In the present specification, a boundary between the first and second negative electrode active material layers can be confirmed by measuring an electrode cross-section. For example, the boundary between the two layers can be confirmed by cutting an electrode cross-section by ion milling and measuring the cross-sectioned electrode with a scanning electron microscope.

According to an exemplary embodiment, the average particle diameter (D50) of the natural graphite may be 9 µm or less, or 6 µm to 9 µm. The larger the particle diameter of natural graphite, the longer the lithium diffusion distance in the particle, resulting in worse rapid charging. In contrast, the smaller the particle diameter, the shorter the lithium diffusion distance, and more advantageous for improving rapid charge. As an exemplary method for controlling the particle diameter of natural graphite, a method of reducing a large specific surface area by spheroidizing flaky natural graphite and treating a surface of the spheroidized natural graphite with carbon coating may be used. The flaky natural graphite can be spheroidized through air flow classification. The carbon coating treatment on the surface can be performed by placing a precursor on modified spherical natural graphite and then heat treating the same. The precursor is for carbon coating treatment on the surface of natural graphite, and as a non-limiting example, a material such as pitch may be used.

According to an exemplary embodiment, the first and second negative electrode active material layers may further include artificial graphite. An average particle diameter (D50) of the artificial graphite may be 15 µm to 50 µm. When the average particle diameter (D50) of the artificial graphite is 15 µm or greater, negative electrode adhesion can be improved, and when it is 50 µm or less, the particle size can be effectively controlled to improve negative electrode rapid charge performance.

According to an exemplary embodiment, the first and second negative electrode active material layers may each include 10 to 50 parts by weight, for example, 10 to 45 parts by weight of the natural graphite based on 100 parts by weight of the negative electrode active material.

According to an exemplary embodiment, the first and second negative electrode active material layers may each include 50 to 99 parts by weight, for example, 60 to 90 parts by weight, or 50 to 85 parts by weight of the artificial graphite based on 100 parts by weight of the negative electrode active material. The higher content of the artificial graphite than the content of the natural graphite may be advantageous for improving rapid charge performance.

In an exemplary embodiment of the present specification, the silicon-based active material includes at least one of SiOₓ (0≤x<2), SiM_{y} (M is metal, 1≤y≤4), and Si/C. The silicon-based active material may include only one type, or two or more types together. When all the two negative electrode active material layers include silicon-based active materials, the same type of silicon-based active material, or different types or different combinations of silicon-based active materials may be used for the two active material layers.

In an exemplary embodiment of the present specification, the negative electrode active material layer including the silicon-based active material may further include a carbon-based active material. In this case, the silicon-based active material may be included in an amount of 1 to 40 parts by weight, for example, 1 to 20 parts by weight, based on a total of 100 parts by weight of the active material included in the negative electrode active material layer including the silicon-based active material.

The active material including SiOx (0≤x<2) as the silicon-based active material may be a silicon-based composite particle including SiOₓ (0<x<2) and a pore.

The SiOx (0<x<2) corresponds to a matrix in the silicon-based composite particle. The SiOₓ(0<x<2) may be a form of including Si and SiO₂, and the Si may form a phase. That is, x corresponds to a ratio of the number of O to Si included in the SiOₓ(0<x<2). When the silicon-based composite particle includes the SiOₓ (0<x<2), a discharge capacity of a secondary battery can be improved.

The silicon-based composite particle may further include at least one of an Mg compound and a Li compound. The Mg compound and the Li compound may correspond to a matrix in the silicon-based composite particle.

The Mg compound and/or the Li compound may be present in the SiOx (0<x<2) and/or on a surface of the SiOx (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt% or 0.1 wt% to 10 wt% on the basis of 100 wt% of a total of the silicon-based active material. Specifically, the Mg element may be included in an amount of 0.5 wt% to 8 wt% or 0.8 wt% to 4 wt%. When the above range is satisfied, the Mg compound can be included in an appropriate content in the silicon-based active material, so the volume change of the silicon-based active material during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c}(2≤a≤4, 0<b≤2, 2≤c≤5) and may be divided into crystalline lithium silicate and amorphous lithium silicate. The crystalline lithium silicate may be present in the silicon-based composite particle in a form of at least one lithium silicate selected from the group consisting of Li₂SiO₃, Li₄SiO₄ and Li₂Si₂O₅, and the amorphous lithium silicate may be a form of LiₐSi_{b}O_{c} (2≤a≤4, 0<b≤2, 2≤c≤5). However, the present invention is not limited thereto.

In an exemplary embodiment of the present specification, the Li element may be included in an amount of 0.1 wt% to 20 wt% or 0.1 wt% to 10 wt% on the basis of 100 wt% of a total of the silicon-based active material. Specifically, the Li element may be included in an amount of 0.5 wt% to 8 wt%, and more specifically, 0.5 wt% to 4 wt%. When the above range is satisfied, the Li compound can be included in an appropriate content in the silicon-based active material, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon-based active material can be analyzed.

In an exemplary embodiment of the present specification, a carbon layer may be provided on a surface of the silicon-based composite particle and/or inside the pore. Conductivity is imparted to the silicon-based composite particle by the carbon layer, so that the initial efficiency, life characteristics, and battery capacity characteristics of a secondary battery including the negative electrode active material including the silicon-based composite particle can be improved. A total amount of the carbon layer included may be 5 wt% to 40 wt% on the basis of 100 wt% of a total of the silicon-based composite particle.

In an exemplary embodiment of the present specification, the carbon layer may include at least one of amorphous carbon or crystalline carbon.

An average particle diameter (D50) of the silicon-based active material may be 2 µm to 15 µm, specifically 3 µm to 12 µm, and more specifically 4 µm to 10 µm. When the above range is satisfied, a side reaction between the silicon-based composite particle and the electrolyte solution is controlled, and the discharge capacity and initial efficiency of the battery can be effectively implemented.

In the present specification, the average particle diameter (D50) may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron range to several millimeters can be measured, and results with high reproducibility and high resolvability can be obtained.

The active material including Si/C as the silicon-based active material is a composite of Si and C, and is distinguished from silicon carbide denoted as SiC. The silicon carbon composite may be a composite of silicon, graphite, etc., and may form a structure in which a core composite of silicon, graphite, etc. is surrounded by graphene, amorphous carbon or the like. In the silicon carbon composite, silicon may be nano silicon.

In an exemplary embodiment of the present specification, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to an additional exemplary embodiment of the present specification, the negative electrode active material layer may further include a negative electrode binder, in addition to the silicon-based active material and the carbon-based active material.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 20 parts by weight or less, for example, preferably 0.3 part by weight or more and 20 parts by weight or less, and more preferably 0.5 part by weight or more and 10 parts by weight or less on the basis of 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 20 parts by weight, and preferably 0.03 part by weight to 18 parts by weight on the basis of 100 parts by weight of the negative electrode active material layer.

In an exemplary embodiment of the present specification, a thickness of each of the first and second negative electrode active material layers may be 5 µm or greater and 500 µm or less. A ratio of the thicknesses of the first and second negative electrode active material layers may be 1:2 to 2:1.

In an exemplary embodiment of the present specification, the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 µm to 500 µm. However, the thickness of the current collector is not limited thereto.

An additional exemplary embodiment of the present specification provides a secondary battery including the negative electrode according to the above-described exemplary embodiments, a positive electrode, and a separator.

In an exemplary embodiment of the present specification, the positive electrode may include a positive electrode current collector and a positive electrode active material layer formed on the positive electrode current collector and including the positive electrode active material. A thickness of the positive electrode active material layer may be 20 µm or greater and 500 µm or less.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In an exemplary embodiment of the present specification, the positive electrode may include a lithium composite transition metal compound including nickel (Ni) and cobalt (Co), as an active material. The lithium composite transition metal compound may further include at least one of manganese and aluminum. The lithium composite transition metal compound may include 80 mol% or more, for example, 80 mol% or more and less than 100 mol% of nickel among metals other than lithium.

In an exemplary embodiment, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to a further exemplary embodiment of the present specification, the positive electrode active material layer according to the exemplary embodiment described above may further include a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

The positive electrode and the negative electrode can be manufactured according to a conventional method for manufacturing a positive electrode and a negative electrode, except using the positive electrode and negative electrode active materials described above. Specifically, the electrode can be manufactured by applying a composition for active material layer formation, including the above-described active material and, optionally, a binder and a conductive material, onto a current collector, followed by drying and rolling. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

The secondary battery according to an exemplary embodiment of the present invention includes an assembly including a positive electrode, a negative electrode, a separator, and an electrolyte, and may be a lithium secondary battery.

A further exemplary embodiment of the present invention provides a battery module including the aforementioned secondary battery as a unit cell, and a battery pack including the battery module. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the secondary battery according to the exemplary embodiments of the present invention stably exhibits excellent discharge capacity, output characteristics, and cycle performance, the secondary battery can be used as a power source of a portable device such as a mobile phone, a laptop computer, and a digital camera as well as a medium to large sized device selected from the group consisting of an electric vehicle, a hybrid electric vehicle, a plug-in hybrid electric vehicle and a power storage system. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

### Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Example 1

A first negative electrode active material layer was formed by coating a copper foil having a thickness of 15 µm with a composition for formation of a first negative electrode active material layer, including artificial graphite with D50 of 20 µm, SiO, and natural graphite with D50 of 9 µm, as a negative electrode active material, in order to have a thickness of about 33 µm in a dry state, and then drying the same. A second negative electrode active material layer was formed by coating the first negative electrode active material layer with a composition for formation of a second negative electrode active material layer, including artificial graphite with D50 of 20 µm, SiO, and natural graphite with D50 of 9 µm, as a negative electrode active material, in order to have a thickness of about 33 µm in a dry state, and then drying the same, whereby a negative electrode was prepared.

The compositions for formation of first and second negative electrode active material layers were prepared by mixing the aforementioned negative electrode active material, Super C65 as a conductive material, styrene butadiene rubber (SBR) as a binder, and carboxymethyl cellulose (CMC) as a thickener at weight ratios of 96 (artificial graphite/natural graphite/SiO: 50/49/1):1:2:1 (first negative electrode active material layer) and 96 (artificial graphite/natural graphite/SiO: 70/27/3):1:2:1 (second negative electrode active material layer), respectively, and adding water, and the compositions were each coated on the copper foil.

After coating the compositions, the temperature of the rolling roll was set before rolling, and then the negative electrode was placed between the rolls and rolling was performed. At this time, the temperature of the rolling roll was set to about 40°C to 45°C.

The difference in porosity between the first and second negative electrode active material layers prepared was 5%. The difference in porosity is obtained by measuring the cross-sectional image of the negative electrode, dividing the upper and lower negative electrode active material layers, finding pores while excluding the composition in each layer, calculating the porosity in each layer, and calculating the difference.

A lithium coin half-cell was prepared by injecting an electrolyte solution obtained by dissolving vinylene carbonate to 0.5 wt% in a mixed solution in which ethyl methyl carbonate (EMC) and ethylene carbonate (EC) were mixed in a volume ratio of 7:3, and dissolving LiPF₆ to a concentration of 1M.

### Example 2

The same procedure as in Example 1 was carried out, except that natural graphite with D50 of 9 µm was used and the temperature of the rolling roll was 40°C to 45°C. The difference in porosity between the first and second negative electrode active material layers prepared was 3%.

### Comparative Example 1

The same procedure as in Example 1 was carried out, except that natural graphite with D50 of 18 µm was used. The difference in porosity between the first and second negative electrode active material layers prepared was 5%.

### Comparative Example 2

The same procedure as in Example 1 was carried out, except that the rolling was carried out at a lower temperature (room temperature 25°C). The difference in porosity between the first and second negative electrode active material layers prepared was 15%.

### Comparative Example 3

The same procedure as in Example 2 was carried out, except that natural graphite with D50 of 12 µm was used. The difference in porosity between the first and second negative electrode active material layers prepared was 7%.

### Comparative Example 4

The same procedure as in Example 1 was carried out, except that natural graphite with D50 of 10 µm was used. The difference in porosity between the first and second negative electrode active material layers prepared was 5%.

### Comparative Example 5

The same procedure as in Example 1 was carried out, except that natural graphite with D50 of 10 µm was used and the temperature of the rolling roll was about 30°C. The difference in porosity between the first and second negative electrode active material layers prepared was 10%.

The prepared half-cell was charged/discharged three times at 0.1 C, and charged in a constant current (CC) mode (3 C) for 15 minutes based on the discharge capacity of the third cycle as 1 C. During this, the output voltage depending on a change in state-of-charge (SOC) was differentiated with respect to the capacity to find a point of change in slope and to determine the Li plating SOC. In this manner, rapid charge performance was evaluated.

**[Table 1]**

| | 3C Li plating SOC(%) |
|---|---|
| Example 1 | 25 |
| Example 2 | 29 |
| Comparative Example 1 | 20 |
| Comparative Example 2 | 20 |
| Comparative Example 3 | 21 |
| Comparative Example 4 | 22 |
| Comparative Example 5 | 20 |

As shown in Table 1, the cells prepared in Examples 1 and 2 show higher 3 C Li plating SOC(%) values, as compared with Comparative Examples 1-5. The higher the 3 C Li plating SOC value, the rapid charge up to a higher SOC without lithium precipitation can be made. Therefore, it could be confirmed that Examples 1 and 2 had more excellent half-cell rapid charge performance than Comparative Examples 1 to 5.

## Claims

1. A negative electrode for a secondary battery, comprising:
a current collector;
a first negative electrode active material layer provided on the current collector; and
a second negative electrode active material layer provided on the first negative electrode active material layer,
wherein the first and second negative electrode active material layers comprise a silicon-based active material and natural graphite, and the natural graphite has an average particle diameter (D50) of 9 µm or less, and
wherein a difference in porosity between the first negative electrode active material layer and the second negative electrode active material layer is 6% or less.

2. The negative electrode for a secondary battery of claim 1, wherein the natural graphite has an average particle diameter (D50) of 6 µm to 9 µm.

3. The negative electrode for a secondary battery of claim 1, wherein the first and second negative electrode active material layers further comprise artificial graphite.

4. The negative electrode for a secondary battery of claim 3, wherein the artificial graphite has an average particle diameter (D50) of 15 µm to 50 µm.

5. The negative electrode for a secondary battery of claim 1, wherein the first and second negative electrode active material layers each comprise 1 part by weight to 40 parts by weight of a silicon-based active material on the basis of 100 parts by weight of a negative electrode active material.

6. The negative electrode for a secondary battery of claim 1, wherein the first and second negative electrode active material layers each comprise 10 parts by weight to 50 parts by weight of natural graphite on the basis of 100 parts by weight of a negative electrode active material.

7. The negative electrode for a secondary battery of claim 3, wherein the first and second negative electrode active material layers each comprise 50 parts by weight to 99 parts by weight of artificial graphite on the basis of 100 parts by weight of a negative electrode active material.

8. A secondary battery comprising the negative electrode of any one of claims 1 to 7, a positive electrode, and a separator.

9. The secondary battery of claim 8, wherein the positive electrode comprises a lithium composite transition metal compound including nickel (Ni) and cobalt (Co), as an active material.

10. The secondary battery of claim 9, wherein the lithium composite transition metal compound further comprises at least one of manganese and aluminum.
